# EUROPEAN PATENT SPECIFICATION

(11) **EP 3 753 653 B1**
(45) Date of publication and mention of the grant of the patent: **19.01.2022**
(21) Application number: 20180596.7
(22) Date of filing: 17.06.2020
(51) Int. Cl.: B22F 1/02, B33Y 10/00, B33Y 70/00, B33Y 80/00, C22C 33/02, C22C 38/24

(54) **POWDER FOR ADDITIVE MANUFACTURING, AND DIE-CASTING DIE PART**
PULVER ZUR GENERATIVEN FERTIGUNG UND DRUCKGUSSFORMTEIL
POUDRE DE FABRICATION ADDITIVE ET PIÈCE DE MOULE DE COULÉE SOUS PRESSION

(30) Priority: 18.06.2019 JP 2019112613; 12.03.2020 JP 2020043541
(43) Date of publication of application: 23.12.2020
(73) Proprietor: Daido Steel Co., Ltd., Nagoya-shi Aichi 461-8581 (JP)
(72) Inventor: IBUKI, Motohiro, Nagoya-shi, Aichi, 457-8545 (JP); KAWANO, Masamichi, Nagoya-shi, Aichi 457-8545 (JP); HORIO, Hirotsugu, Nagoya-shi, Aichi 457-8545 (JP); KOYAMA, Haruo, Nagoya-shi, Aichi 457-8545 (JP)
(74) Representative: Diehl & Partner

(56) References cited:
- EP-A2- 2 939 763
- WO-A1-2019/220917
- JP-A- 2016 017 200

## Description

### TECHNICAL FIELD

The present invention relates to a powder for additive manufacturing and a die-casting die part, and particularly relates to a powder for additive manufacturing capable of being conveyed smoothly in an additive-manufacturing machine, and a die-casting die part obtained by additive-manufacturing the powder for additive manufacturing.

### BACKGROUND

"Die-casting" is a method in which molten metal is press-fitted into a die and solidified in the die to thereby produce a casting. The die-casting has a merit that precise castings can be mass-produced in a short time. A typical die for die-casting has a water-cooling circuit internally so that molten metal press-fitted into the die can be solidified in a short time. The water-cooling circuit is normally formed by mechanical processing such as cutting. In addition, the die is heated and cooled repeatedly during the die-casting.

Therefore, a steel material to be used for a die-casting die is requested to have (a) high machinability with which a water-cooling circuit can be formed by cutting, (b) high durability against damage (heat check) caused by a thermal history in use, and (c) high thermal conductivity with which molten metal can be press-fitted and solidified in a short cycle.

In order to answer those requests, tool steel for hot working such as JIS SKD61 is generally used for a die-casting die.

However, the water-cooling circuit formed by the cutting is limited to a circuit like a straight line. Therefore, the water-cooling circuit formed by the cutting is not suitable for functionally cooling a complicated shape.

In addition, about 0.9 mass % of Si contained in SKD61 in order to secure machinability causes reduction in thermal conductivity of steel. Therefore, a die-casting die using tool steel for hot working in the background art, such as SKD61, has a limited cooling performance.

In order to solve the problem, various propositions have been made.

For example, Patent Document 1 discloses a method for additive-manufacturing a part of a die-casting die using steel powder having a predetermined composition.

The same literature suggests that (a) a cooling circuit which is too complicated to be produced by cutting can be formed easily by use of an additive-manufacturing method, and (b) the composition of the steel powder can be optimized to improve cooling efficiency, inhibit a heat check and prevent water-cooling holes from cracking.

The "additive-manufacturing method" is a method in which layers like thin pieces corresponding to a three-dimensional structure horizontally cut into round slices are laminated on one another to manufacture the three-dimensional structure. Examples of the method for laminating the layers like thin pieces include (a) a method of repeating a step of forming a thin layer made of a metal powder and a step of irradiating the powder layer with an energy beam such as a laser beam or an electron beam to thereby locally melt and solidify the powder layer, and (b) a method in which thin sheets having predetermined shapes are put on top of one another and bonded with one another by diffusion.

Among those methods, the additive-manufacturing method using a metal powder has a merit that various three-dimensional shapes can be formed by only changing the irradiation position of the energy beam. Accordingly, when the method is applied to manufacturing of a die-casting die, a non-linear or three-dimensional water cooling circuit can be disposed in the die desirably.

In order to manufacture various members efficiently by use of such an additive-manufacturing method using a metal powder, it is necessary to convey the metal powder to a manufacturing area smoothly. However, it is often difficult to convey a metal powder in the background due to aggregation. European patent application EP 2939763 discloses a steel composition for use in the manufacture of a mould using an additive manufacturing process.

Patent Document 1: JP-A-2016-145407

### SUMMARY OF THE INVENTION

An object of the present invention is to provide a powder for additive manufacturing, which cannot be aggregated easily but can be conveyed smoothly by an additive-manufacturing machine.

Another object of the present invention is to provide a die-casting die part obtained by additive-manufacturing the powder for additive manufacturing.

Namely, the present invention relates to the following configurations (1) to (4).
(1) A powder for additive manufacturing, having a composition consisting of, in mass%:
   0.25<C<0.40,
   0.001≤Si≤0.15,
   0.30≤Mn≤0.45,
   5.0≤Cr≤5.5,
   1. 0≤Mo≤ 1.5,
   0.35≤V≤0.45,
   0.01≤N≤0.05,
   0.01≤O≤0.04, and
   optionally,
   P<0.10,
   Cu<0.20,
   Ni<0.20,
   Al<0.05,
   Zr<0.05,
   S<0.20,
   Pb<0.20,
   Bi<0.20,
   Nb<0.20,
   Ti<0.20,
   B<0.10, and
   Co<0.20, with the balance being Fe and unavoidable impurities,
   in which a surface of the powder for additive manufacturing is coated with an oxide film, and
   the oxide film has a thickness of 3 nm or more and 30 nm or less.
(2) The powder for additive manufacturing according to (1), including at least one element selected from the group consisting of, in mass%:
   0.001<Al<0.05, and
   0.001 <Zr<0.05.
(3) The powder for additive manufacturing according to (1) or (2), including at least one element selected from the group consisting of, in mass%:
   0.001<S<0.20,
   0.001<Pb<0.20, and
   0.001<Bi<0.20.
(4) A die-casting die part obtained by additive-manufacturing the powder for additive manufacturing according to any one of (1) to (3).

According to the additive-manufacturing method, a member can be manufactured into a near net shape so that the processing amount can be reduced in comparison with that in the background art. Thus, even if the Si content is reduced, a demerit caused by deterioration in machinability can be suppressed, and the thermal conductivity can be instead improved due to the reduction in the Si content.

In addition, the metal powder is melted and solidified locally so as to be substantially quenched when solidified. Due to this state, a step of quenching an additive-manufactured product can be omitted. In addition, since the quenching step is not required, VC (vanadium carbide) regarded as necessary to prevent crystal grains from being coarsened during the quenching in the background art does not have to be formed in the structure.

Further, when the surface of the metal powder whose components have been adjusted to have a predetermined composition is coated with an oxide film, the powder can be inhibited from being aggregated. In additive manufacturing with such a powder, the powder can be also conveyed smoothly in addition to the aforementioned effect.

### EMBODIMENTS

An embodiment of the present invention will be described in detail below.

### [1. Powder for Additive Manufacturing]

### [1.1. Components]

### [1.1.1. Main Constituent Elements]

A powder for additive manufacturing according to the present invention contains the following elements with the balance being Fe and unavoidable impurities. Kinds of additive elements, component ranges of the elements, and reasons for limiting the ranges will be described below. In the present specification, the values of each chemical component are expressed in mass% basis unless otherwise indicated.

### (1) 0.25<C<0.40

C is an element having effects of increasing hardness of an additive-manufactured product and improving heat check resistance. The C content has to exceed 0.25 mass % to achieve a high heat check resistance. The C content is preferably 0.28 mass % or higher.

On the other hand, when the C content is excessive, toughness of the additive-manufactured product is lowered. Therefore, the C content has to be lower than 0.40 mass %. The C content is preferably 0.38 mass % or lower.

### (2) 0.001≤Si≤0.15

Si is an element having an effect of reducing thermal conductivity of the additive-manufactured product. The Si content has to be 0.15 mass % or lower in order to obtain high thermal conductivity.

On the other hand, Si also serves as deoxidizer. When the Si content is too low, deoxidation is insufficient. Accordingly, the Si content has to be 0.001 mass % or higher. The Si content is preferably 0.03 mass % or higher.

### (3) 0.30≤Mn≤0.45

Mn is an element having an effect of improving hardenability. In order to obtain high hardenability, the Mn content has to be 0.30 mass % or higher. The Mn content is preferably 0.33 mass % or higher.

On the other hand, due to a very small region melted and solidified, a melt region has a relatively fast cooling rate in the additive-manufactured product. That is, the additive-manufactured product is substantially quenched when solidified. Therefore, even if Mn more than necessary is added, no more effect can be obtained. Mn more than necessary is of no practical use. Accordingly, the Mn content has to be 0.45 mass % or lower. The Mn content is preferably 0.42 mass % or lower.

### (4) 5.0≤Cr≤5.5

Cr is an element having an effect of improving rust resistance in the surface of the water-cooling circuit. In order to obtain high rust resistance, the Cr content has to be 5.0 mass % or higher. The Cr content is preferably 5.2 mass % or higher.

On the other hand, when the Cr content is excessive, thermal conductivity of the additive-manufactured product is lowered. Therefore, the Cr content has to be 5.5 mass % or lower. The Cr content is preferably 5.4 mass % or lower.

### (5) 1.0≤Mo≤1.5

Mo is an element having an effect of improving resistance to high temperature. In order to obtain high resistance to high temperature, the Mo content has to be 1.0 mass % or higher. The Mo content is preferably 1.1 mass % or higher.

On the other hand, when the Mo content is excessive, toughness may be low enough to allow cracking to occur at a corner portion of the water-cooling circuit. Therefore, the Mo content has to be 1.5 mass % or lower. The Mo content is preferably 1.3 mass % or lower.

### (6) 0.35≤V≤0.45

V is an element having an effect of secondarily hardening the additive-manufactured product when the additive-manufactured product is tempered at high temperature. In order to obtain high hardness, the V content has to be 0.35 mass % or higher.

On the other hand, when the V content is excessive, coarse carbide tends to be formed when the additive-manufactured product is solidified. The coarse carbide tends to serve as a start point of cracking. Therefore, the V content has to be 0.45 mass % or lower.

The V content is preferably 0.42 mass % or lower.

### (7) 0.01≤N≤0.05 mass %

N is an element that may be contained unavoidably. In a solid solution, N is also an element contributing to improvement of hardness in the same manner as C. In order to obtain such an effect, the N content has to be 0.01 mass % or higher.

On the other hand, when the N content is excessive, coarse carbonitride tends to be formed. The coarse carbonitride tends to serve as a start point of cracking. Therefore, the N content has to be 0.05 mass % or lower.

### (8) 0.01≤O≤0.04

O is an element having an effect of forming oxide in the surface of the powder to thereby inhibit aggregation of the powder (that is, an effect of improving the powder conveyance performance of the additive-manufacturing machine). In order to obtain such an effect, the O content has to be 0.01 mass% or higher.

On the other hand, when the O content is excessive, a layer of the oxide has an excessive thickness. The thick oxide layer tends to form oxide in the additive-manufactured product to thereby serve as a start point of cracking. Therefore, the O content has to be 0.04 mass % or lower.

### [1.1.2. Optional Constituent Elements]

The powder for additive manufacturing according to the present invention may further contain one or more elements as follows. Kinds of additive elements, component ranges of the elements, and reasons for limiting the ranges will be described below.

(9) P<0.10;
(10) Cu<0.20; and
(11) Ni<0.20

Those elements are elements contained in raw material scraps. The elements may be contained as long as they are lower than the aforementioned contents respectively.

(12) 0.001<Al<0.05; and
(13) 0.001<Zr<0.05

Each of Al and Zr has an effect of forming a dense oxide film in the surface of the powder. In order to obtain such an effect, each of the A1 content and the Zr content is preferably higher than 0.001 mass %.

On the other hand, even when those elements are added excessively, the proportion of those elements contained relatively to oxygen increases to give no effect on the formation of the oxide film. Therefore, each of the A1 content and the Zr content is preferably lower than 0.05 mass %.

(14) 0.001<S<0.20;
(15) 0.001<Pb<0.20; and
(16) 0.001<Bi<0.20

Those elements may be added to improve free cuttability. In order to obtain such an effect, each of the S content, the Pb content and the Bi content is preferably higher than 0.001 mass %.

On the other hand, when the contents of those elements are excessive, toughness is lowered. Therefore, each of the S content, the Pb content and the Bi content is preferably lower than 0.20 mass %.

(17) Nb<0.20;
(18) Ti<0.20;
(19) B<0.10; and
(20) Co<0.20

Those elements are impurities contained in raw material scraps. Each of them may be contained as long as the content thereof is lower than the aforementioned content.

### [1.2. Oxide Film]

The surface of the powder for additive manufacturing according to the present invention is coated with an oxide film. This is a different point from the background art. The thickness of the oxide film in the surface of the powder gives influence to the conveyance performance of the powder and the toughness of the additive-manufactured product.

Here, the "thickness of the oxide film" corresponds to a depth which is measured by Auger spectroscopy and in which oxides can be estimated to be formed. A major oxide forming the oxides is typically a metal oxide such as SiO₂. When Al is added, the major oxide is Al₂O₃. The depth is calculated from the relationship between the sputtering time and the depth of an SiO₂ standard sample or an Al₂O₃ standard sample.

When the thickness of the oxide film is too thin, the powder tends to be aggregated to thereby reduce the conveyance performance of the powder. Therefore, the thickness of the oxide film is 3 nm or more.

On the other hand, when the thickness of the oxide film is too thick, coarse oxide is left behind in the additive-manufactured product so that the oxide tends to serve as a start point of cracking. Therefore, the thickness of the oxide film is 30 nm or less

### [1.3. Average Grain Size]

The average grain size of the powder for additive manufacturing is not particularly limited, but an optimum value can be selected in accordance with a purpose. The optimum average grain size depends on the specification of the additive-manufacturing machine. The average grain size of the powder for additive manufacturing is typically about 1 µm to 200 µm. The average grain size is preferably about 15 µm to 45 µm.

### [2. Method for Manufacturing Powder for Additive Manufacturing]

The powder for additive manufacturing according to the present invention can be, for example, manufactured by (a) an atomizing method in which a jet flow of air, water, inert gas, or the like is sprayed to molten metal, (b) a method in which an ingot is mechanically powdered, or the like.

The oxide film having a desired thickness can be obtained by adjusting the oxygen content in the molten metal in consideration of the amount which will be obtained in subsequent steps of classification and so on (that is, in consideration of natural oxide which will be formed). Further, the oxide film can be also obtained by heating the powder in an atmosphere having a certain oxygen partial pressure.

### [3. Die-Casting Die Part]

A die-casting die part according to the present invention includes a product obtained by additive-manufacturing the powder for additive manufacturing according to the present invention.

Examples of such die-casting die parts include a nest, a core pin, a core, etc.

In addition, examples of die-cast parts manufactured by use of such die-casting die parts include an engine block, a transmission case, a suspension tower, etc.

Specifically the die-casting die part according to the present invention can be manufactured by repeating (a) a step of forming a thin powder layer including the powder for additive manufacturing according to the present invention, and (b) a step of irradiating the powder layer with an energy beam such as a laser beam or an electron beam to thereby locally melt and solidify the powder layer.

In addition, the die-casting die part thus-obtained may be tempered at 500°C to 700°C if necessary.

The kind of the additive-manufacturing machine, the conditions for the additive manufacturing and the other conditions about the tempering are not particularly limited, but optimum ones may be selected in accordance with a purpose.

### [4. Effect]

The additive-manufacturing method can manufacture a member into a near net shape so that the processing amount can be reduced in comparison with that in the background art. Thus, even if the Si content is reduced, a demerit caused by deterioration in machinability can be suppressed, and the thermal conductivity can be instead improved due to the reduction in the Si content.

In addition, the metal powder is melted and solidified locally so as to be substantially quenched when solidified. Due to this state, a step of quenching the additive-manufactured product can be omitted. In addition, since the quenching step is not required, VC regarded as necessary to prevent crystal grains from being coarsened during the quenching in the background art does not have to be formed in the structure.

Further, when the surface of the metal powder whose components have been adjusted to have a predetermined composition is coated with an oxide film, the powder can be inhibited from being aggregated. In additive manufacturing with such a powder, the powder can be also conveyed smoothly in addition to the aforementioned effect.

### EXAMPLES

### (Examples 1 to 20, and Comparative Examples 1 to 5)

### [1. Manufacturing of Sample]

### [1.1. Manufacturing of Powder for Additive Manufacturing]

A powder was manufactured by an atomizing method using raw materials blended to have a predetermined composition. Next, the powder thus-obtained was subjected to an oxidation treatment to form an oxide film with a predetermined thickness in the surface of the powder, except for Comparative Example 1. Table 1 shows the composition of each obtained powder for additive manufacturing (the balance is Fe and unavoidable impurities).

**Table 1**

| | Composition (mass %) | | | | | | | | |
|---|---|---|---|---|---|---|---|---|---|
| | _{C} | Si | Mn | Cr | Mo | V | N | O | others |
| Example 1 | 0.35 | 0.06 | 0.42 | 5.3 | 1.4 | 0.41 | 0.03 | 0.04 | |
| Example 2 | 0.31 | 0.09 | 0.38 | 5.1 | 1.2 | 0.37 | 0.04 | 0.02 | |
| Example 3 | 0.39 | 0.13 | 0.33 | 5.5 | 1.5 | 0.36 | 0.01 | 0.01 | |
| Example 4 | 0.37 | 0.05 | 0.31 | 5.3 | 1 | 0.39 | 0.05 | 0.02 | |
| Example 5 | 0.27 | 0.12 | 0.39 | 5.4 | 1.1 | 0.42 | 0.01 | 0.03 | |
| Example 6 | 0.35 | 0.03 | 0.43 | 5 | 1.2 | 0.35 | 0.05 | 0.03 | |
| Example 7 | 0.29 | 0.15 | 0.3 | 5.1 | 1.3 | 0.38 | 0.02 | 0.01 | |
| Example 8 | 0.32 | 0.07 | 0.45 | 5.4 | 1.3 | 0.44 | 0.02 | 0.04 | |
| Example 9 | 0.26 | 0.01 | 0.36 | 5.2 | 1.1 | 0.36 | 0.04 | 0.02 | |
| Example 10 | 0.33 | 0.11 | 0.41 | 5.4 | 1.4 | 0.45 | 0.03 | 0.03 | |
| Example 11 | 0.36 | 0.06 | 0.33 | 5.3 | 1.4 | 0.37 | 0.02 | 0.02 | |
| Example 12 | 0.32 | 0.07 | 0.35 | 5.4 | 1.3 | 0.43 | 0.01 | 0.03 | |
| Example 13 | 0.33 | 0.08 | 0.36 | 5.4 | 1.1 | 0.41 | 0.03 | 0.03 | |
| Example 14 | 0.26 | 0.13 | 0.41 | 5.2 | 1.4 | 0.38 | 0.01 | 0.04 | |
| Example 15 | 0.26 | 0.11 | 0.41 | 5.3 | 1.1 | 0.43 | 0.04 | 0.03 | Al=0.04 |
| Example 16 | 0.31 | 0.05 | 0.34 | 5.1 | 1.5 | 0.37 | 0.02 | 0.01 | Al=0.005 |
| Example 17 | 0.37 | 0.07 | 0.45 | 5.4 | 1.3 | 0.41 | 0.03 | 0.04 | Al=0.02 |
| Example 18 | 0.33 | 0.01 | 0.31 | 5 | 1 | 0.35 | 0.03 | 0.03 | Zr=0.03 |
| Example 19 | 0.28 | 0.14 | 0.43 | 5.5 | 1.4 | 0.45 | 0.01 | 0.02 | Zr=0.003 |
| Example 20 | 0.35 | 0.09 | 0.37 | 5.2 | 1.2 | 0.39 | 0.05 | 0.02 | Z=0.04 |
| Comparative Example 1 | 0.33 | 0.07 | 0.37 | 5.2 | 1.1 | 0.37 | 0.02 | 0.004 | |
| Comparative Example 2 | 0.21 | 0.06 | 0.39 | 5.4 | 1.2 | 0.42 | 0.02 | 0.03 | |
| Comparative Example 3 | 0.31 | 0.09 | 0.42 | 5.3 | 1.3 | 0.55 | 0.03 | 0.02 | |
| Comparative Example 4 | 0.36 | 0.25 | 0.4 | 5.4 | 1.1 | 0.39 | 0.01 | 0.03 | |
| Comparative Example 5 | 0.31 | 0.08 | 0.41 | 5.3 | 1.2 | 0.4 | 0.02 | 0.07 | |

### [1.2. Manufacturing of Additive-Manufactured Product]

An additive-manufactured product was manufactured by use of the powder for additive manufacturing. M2 made by Concept Laser GmbH was used as an additive-manufacturing machine.

### [2. Testing Method]

### [2.1. Spreadability]

For additive manufacturing, the metal powder is spread over an additive-manufacturing region before irradiation with a laser beam. Uniformity of the metal powder thus-spread was evaluated visually. "A" designates a state where there are no irregularities in the surface of the powder layer. "B" designates a state where the surface of the powder layer rises due to the aggregated powder or sinks due to insufficient feeding of the powder.

### [2.2. Hardness as Manufactured]

Hardness of the additive-manufactured product (not tempered) was measured by a Rockwell C scale.

### [2.3. Impact Value]

A Charpy impact test piece with a U-notch of 2 mm was produced from the additive-manufactured product (not tempered). An impact value was measured by use of the obtained test piece. A measuring tester according to JIS B 7722:2018 was used on the measuring condition of a room temperature.

### [2.4. Heat Check Resistance]

A columnar test piece having a diameter of 70 mm was produced from the additive-manufactured product (not tempered). A step of heating a flat surface of the test piece to 580°C by high frequency heating and a step of water cooling were repeated until cracking occurred in the surface of the test piece. The number of repetition at the time when cracking occurred was regarded as an index of heat check resistance.

### [2.5. Thermal Conductivity]

A test piece having a size of 10 mm (diameter)×2 mm was cut out from the additive-manufactured product (not tempered). Thermal conductivity was measured by a laser flash method using the obtained test piece. The blackened test piece whose density was known was irradiated by a laser, and specific heat and thermal diffusivity were measured from a temperature rise. Thus, the thermal conductivity was calculated. The measurement was performed on the condition of a room temperature.

### [2.6. Oxide Film Thickness]

For each powder, oxide film thickness was measured by Auger spectroscopy.

### [3. Results]

Table 2 shows the results. From Table 2, some facts can be concluded as follows. (1) The spreadability was low in Comparative Example 1. It was considered that this was because the oxide film thickness in the surface of the powder was so thin that the powder was aggregated. (2) In Comparative Example 2, the hardness as manufactured was low, and the heat check resistance was also low. It was considered that this was because the C content was low. (3) The impact value was low in Comparative Example 3. It was considered that this was because the V amount was so excessive that coarse carbide was produced.

(4) In Comparative Example 4, the thermal conductivity was low. It was considered that this was because the Si amount was excessive. (5) In Comparative Example 5, the impact value was low. It was considered that this was because the O amount was excessive (that is, an excessive oxide film was formed in the surface of the powder). (6) In each of Examples 1 to 20, the spreadability was good, the hardness as manufactured was high, the heat check resistance was excellent, the impact value was high, and the thermal conductivity was high.

**Table 2**

| | Spreadability | Hardness as manufactured | Impact value | Heat check resistance | Thermal conductivity | Oxide film thickness |
|---|---|---|---|---|---|---|
| | | (HRC) | (J/cm²) | (number of times) | (W/m·k) | (nm) |
| Example 1 | A | 51.8 | 23 | 9000 | 33.1 | 30 |
| Example 2 | A | 49.8 | 25 | 7000 | 34.0 | 15 |
| Example 3 | A | 54.1 | 21 | 12000 | 30.6 | 6 |
| Example 4 | A | 53.1 | 23 | 10000 | 33.2 | 12 |
| Example 5 | A | 48.8 | 21 | 5000 | 33.9 | 23 |
| Example 6 | A | 52.1 | 23 | 8000 | 34.2 | 19 |
| Example 7 | A | 49.3 | 22 | 6000 | 33.7 | 9 |
| Example 8 | A | 50.6 | 24 | 7000 | 33.3 | 24 |
| Example 9 | A | 47.8 | 24 | 6000 | 37.1 | 17 |
| Example 10 | A | 51.3 | 22 | 8000 | 32.4 | 22 |
| Example 11 | A | 52.8 | 25 | 10000 | 34.3 | 13 |
| Example 12 | A | 51.1 | 24 | 8000 | 33.5 | 19 |
| Example 13 | A | 51.8 | 23 | 8000 | 33.7 | 22 |
| Example 14 | A | 48.1 | 26 | 8000 | 33.6 | 28 |
| Example 15 | A | 48.3 | 25 | 5000 | 32.3 | 24 |
| Example 16 | A | 49.6 | 24 | 7000 | 33.4 | 7 |
| Example 17 | A | 52.8 | 22 | 9000 | 33.1 | 26 |
| Example 18 | A | 50.9 | 21 | 8000 | 34.3 | 19 |
| Example 19 | A | 49.2 | 23 | 7000 | 30.2 | 14 |
| Example 20 | A | 52.2 | 22 | 8000 | 33.4 | 17 |
| Comparative Example 1 | B | 50.8 | 23 | 6000 | 33.7 | 2 |
| Comparative Example 2 | A | 43.5 | 28 | 3000 | 36.7 | 18 |
| Comparative Example 3 | A | 50.2 | 18 | 6000 | 33.5 | 15 |
| Comparative Example 4 | A | 52.8 | 22 | 7000 | 29.4 | 20 |
| Comparative Example 5 | A | 49.6 | 9 | 7000 | 32.8 | 50 |

Although the embodiment of the present invention has been described above, the present invention is not limited to the aforementioned embodiment at all. Various modifications can be made on the present invention without departing from the gist of the present invention.

The present application is based on Japanese Patent Applications No. 2019-112613 filed on June 18, 2019 and No. 2020-043541 filed on March 12, 2020.

### INDUSTRIAL APPLICABILITY

A powder for additive manufacturing according to the present invention can be used for additive-manufacturing a die-casting die part.

## Claims

1. A powder for additive manufacturing, having a composition consisting of, in mass%:
0.25<C<0.40,
0.001≤Si≤0.15,
0.30≤Mn≤0.45,
5.0≤Cr≤5.5,
1.0≤Mo≤1.5,
0.35≤V≤0.45,
0.01≤N≤0.05,
0.01≤O≤0.04, and
optionally,
P<0.10,
Cu<0.20,
Ni<0.20,
Al<0.05,
Zr<0.05,
S<0.20,
Pb<0.20,
Bi<0.20,
Nb<0.20,
Ti<0.20,
B<0.10, and
Co<0.20,
with the balance being Fe and unavoidable impurities,
wherein a surface of the powder for additive manufacturing is coated with an oxide film, and
the oxide film has a thickness of 3 nm or more and 30 nm or less.

2. The powder for additive manufacturing according to Claim 1, comprising at least one element selected from the group consisting of, in mass%:
0.001<Al<0.05, and
0.001<Zr<0.05.

3. The powder for additive manufacturing according to Claim 1 or 2, comprising at least one element selected from the group consisting of, in mass%:
0.001 <S<0.20,
0.001<Pb<0.20, and
0.001<Bi<0.20.

4. A die-casting die part obtained by additive-manufacturing the powder for additive manufacturing according to any one of Claims 1 to 3.

## Patentansprüche

1. Pulver für additives Fertigen mit einer Zusammensetzung, die besteht aus, in Massen%:
0,25<C<0,40,
0,001≤Si≤0,15,
0,30≤Mn≤0,45,
5,0≤Cr≤5,5,
1,0≤Mo≤1,5,
0,35≤V≤0,45,
0,01≤N≤0,05,
0,01≤O≤0,04, und
optional
P<0,10,
Cu<0,20,
Ni <0,20,
Al<0,05,
Zr<0,05,
S<0,20,
Pb<0,20,
Bi<0,20,
Nb<0,20,
Ti<0,20,
B<0,10, and
Co<0,20,
mit dem Rest Fe und unvermeidliche Verunreinigungen,
wobei eine Oberfläche des Pulvers für additives Fertigen mit einer Oxidschicht bedeckt ist, und
die Oxidschicht eine Dicke von 3 nm oder mehr und 30 nm oder weniger aufweist.

2. Pulver für additives Fertigen gemäß Anspruch 1, beinhaltend wenigstens ein Element ausgewählt aus der Gruppe, die besteht aus, in Massen%:
0,001 <A1<0,05, und
0,001 <Zr<0,05.

3. Pulver für additives Fertigen gemäß Anspruch 1 oder 2, beinhaltend wenigstens ein Element ausgewählt aus der Gruppe, die besteht aus, in Massen %:
0,001 <S<0,20,
0,001 <Pb<0,20, und
0,001 <Bi<0,20.

4. Druckguss-Matrizenteil erhalten durch additives Fertigen aus dem- Pulver für additives Fertigen gemäß einem der Ansprüche 1 bis 3.

## Revendications

1. Poudre pour fabrication additive, ayant une composition constituée de, en % en masse :
0,25 < C <0,40,
0,001 ≤ Si ≤ 0,15,
0,30 ≤ Mn ≤ 0,45,
5,0 ≤ Cr ≤ 5,5,
1,0 ≤ Mo ≤ 1,5,
0,35 ≤ V ≤ 0,45,
0,01 ≤ N ≤ 0,05,
0,01 ≤ O ≤ 0,04, et
facultativement,
P < 0,10,
Cu < 0,20,
Ni < 0,20,
Al < 0,05,
Zr < 0,05,
S < 0,20,
Pb < 0,20,
Bi < 0,20,
Nb < 0,20,
Ti < 0,20,
B < 0,10, et
Co < 0,20,
le reste étant Fe et des impuretés inévitables,
dans laquelle une surface de la poudre pour fabrication additive est revêtue d'un film d'oxyde, et
le film d'oxyde a une épaisseur de 3 nm ou plus et de 30 nm ou moins.

2. Poudre pour fabrication additive selon la revendication 1, comprenant au moins un élément choisi dans le groupe constitué de, en % en masse :
0,001 < Al < 0,05, et
0,001 < Zr< 0,05.

3. Poudre pour fabrication additive selon la revendication 1 ou 2, comprenant au moins un élément choisi dans le groupe constitué de, en % en masse :
0,001 < S < 0,20,
0,001 < Pb < 0,20, et
0,001 < Bi < 0,20.

4. Pièce de moule à couler sous pression obtenue par fabrication additive de la poudre pour fabrication additive selon l'une quelconque des revendications 1 à 3.
